# EUROPEAN PATENT SPECIFICATION

(11) **EP 2 988 539 B1**
(45) Date of publication and mention of the grant of the patent: **10.04.2019**
(21) Application number: 13882421.4
(22) Date of filing: 24.10.2013
(51) Int. Cl.: H04W 12/06, H04W 4/00, G06F 21/34, H04L 29/06, H04W 8/18

(54) **INFORMATION ACQUISITION METHOD, DEVICE AND TERMINAL**
INFORMATIONSERFASSUNGSVERFAHREN, -VORRICHTUNG UND -ENDGERÄT
MÉTHODE, DISPOSITIF ET TERMINAL D'ACQUISITION D'INFORMATIONS

(30) Priority: 16.04.2013 CN 201310131976
(43) Date of publication of application: 24.02.2016
(73) Proprietor: Xiaomi Inc., Beijing 100085 (CN)
(72) Inventor: DI, Hao, Beijing 100085 (CN); SUN, Wei, Beijing 100085 (CN); SHI, Xinming, Beijing 100085 (CN)
(74) Representative: Sackin, Robert
(86) International application number: PCT/CN2013/085849
(87) International publication number: WO 2014/169605

(56) References cited:
- EP-A1- 2 701 414
- WO-A1-2012/177200
- CN-A- 102 264 061
- CN-A- 103 268 462
- CN-U- 202 049 495
- US-A1- 2010 304 670
- US-A1- 2012 117 635
- US-A1- 2014 057 558
- US-A1- 2015 079 982
- US-B1- 8 295 811

## Description

### TECHNICAL FIELD

The present disclosure relates to the technical field of mobile communication, and more particularly, to a method, a device and a terminal for obtaining information.

### BACKGROUND

Smart terminals such as mobile phones have become indispensable constituents in people's daily life. However, when a user wants to obtain services provided by an operator by using a terminal, the terminal needs to firstly obtain the certification information provided by the operator, so as to obtain corresponding services after being certificated by the operator by using the certification information.

The certification information provided by the operator is mainly authentication information used to register on the network, wherein the authentication information is usually stored in a SIM (Subscriber Identity Module) card. At present, a common method for obtaining the certification information includes: storing the certification information provided by the operator by using a SIM card, and reserving a SIM card deck for the SIM card in the terminal, wherein a user may insert the SIM card into the reserved SIM card deck when the user wants to obtain services provided by the operator by using the terminal; and using the certification information to register on the network so as to obtain various services provided by the operator after the terminal reads the certification information stored in the SIM card.

During realizing the present disclosure, the present inventor finds out that there are at least problems as below which exist in the above technical solution.

The terminal needs to reserve a SIM card deck for the SIM card, which undoubtedly occupies a certain space in a circuit board of the terminal, so it is not possible to integrate more electronic devices in the limited space of the circuit board, thus restricting expansion of the terminal's functions; and since the SIM card deck occupies a certain space in the circuit board, the distances between other electronic devices in the limited space are reduced, the electromagnetic coupling degrees between the electronic devices are increased, and the electromagnetic compatibility of the terminal deteriorates. Meanwhile, the SIM card deck is provided such that it may naturally increase the sizes and thickness of the terminal, and restrict the ultrathin design and miniaturization of the terminal.

US patent application with publication no. US 2012/0117635 discloses a user device (e.g. a smart phone) in which a simulacrum in the form of a physical representation of a SIM card is used.

US patent application with publication no. US 2010/0304670 discloses a SIM card enclosed within a personal article, such as a wrist watch or item of jewelry. A close range communication link is used to transmit provisioning data from the personal article to one or more mobile devices.

European patent application with publication no. EP 2701414 discloses a near field communication (NFC) link between an NFC device and a user equipment to transmit SIM data to the user equipment, which is stored in a memory of a SIM module in the user equipment.

### SUMMARY

In order to solve the problems that the method for obtaining information provided by the terminal in the background art may restrict expansion of the terminal's functions, and restrict ultrathin design and miniaturization of the terminal, the embodiments of the present disclosure provide a method, a device and a terminal for obtaining information, the technical solutions of which are as below.

Aspects of the present invention are defined by the independent claims below to which reference should now be made. Preferred features are defined by the dependent claims.

The technical solutions provided by the embodiments of the present disclosure may have advantages including:
by reading certification information stored in a smart card of an external device and storing the read certification information in a memory of the terminal, it is possible to obtain corresponding services directly according to the certification information stored in the memory of the terminal, which solves the problems in the background art that the terminal needs to reserve a SIM card deck for the SIM card such that the method for obtaining information provided by the terminal may restrict expansion of the terminal's functions and restrict ultrathin design and miniaturization of the terminal, and meanwhile, which also solves the problems in the background art of high coupling degrees between the electronic devices and bad electromagnetic compatibility of the terminal. An effect that the terminal may integrate more electronic devices in a limited circuit board to expand the terminal's functions and reduce thickness and sizes of the terminal is then achieved.

### BRIEF DESCRIPTION OF THE DRAWINGS

In order to illustrate the technical solutions in the embodiments of the present disclosure more clearly, the accompanying drawings to be used in describing the embodiments will be briefly introduced as below. It is apparent that the accompanying drawings described hereinafter only illustrate some embodiments of the present disclosure. Those skilled in the art may obtain other accompanying drawings from those accompanying drawings without paying any creative labor.
Fig. 1 is an exemplary flow chart showing the method for obtaining information according to a first embodiment of the present disclosure;
Fig. 2 is an exemplary flow chart showing the method for obtaining information according to a second embodiment of the present disclosure;
Fig. 3 is an exemplary flow chart showing the method for obtaining information according to a third embodiment of the present disclosure;
Fig. 4 is a diagram showing the structure when a user selects certification information according to the third embodiment of the present disclosure;
Fig. 5 is a block diagram showing the structure of the device for obtaining information according to a fourth embodiment of the present disclosure;
Fig. 6 is a block diagram showing the structure of the device for obtaining information according to a fifth embodiment of the present disclosure;
Fig. 7 is a block diagram showing the structure of the device for obtaining information according to a sixth embodiment of the present disclosure;
Fig. 8 is a diagram showing the inner structure of the smart card according to a seventh embodiment of the present disclosure; and
Fig. 9 is a diagram showing the external structure of the smart card according to the seventh embodiment of the present disclosure.

### DETAILED DESCRIPTION

The objects, technical solutions and advantages of the embodiments of the present disclosure will become more apparent from the following detailed description of the present disclosure given in conjunction with the accompanying drawings. It is apparent that the embodiments described herein are only a part, but not all, of the embodiments of the present disclosure. Those skilled in the art may obtain other embodiments, which fall within the scope of the present disclosure, from those embodiments of the present disclosure without paying any creative labor.

### Embodiment 1

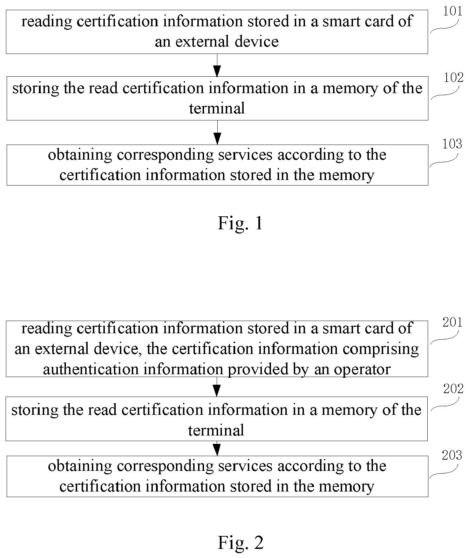

Referring to Fig. 1, which is an exemplary flow chart showing the method for obtaining information according to a first embodiment of the present disclosure, the method for obtaining information may be applied to a terminal such as a mobile phone. The method for obtaining information may include:
step 101, reading certification information stored in a smart card of an external device.

When a user wants to obtain various services provided by an operator by using the terminal, the terminal may firstly read certification information stored in a smart card of an external device, wherein the certification information includes authentication information provided by the operator.

The method also includes a step 102, storing the read certification information in a memory of the terminal.

After the terminal reads the certification information in the smart card, the terminal may store the read certification information in the memory of the terminal.

The method also includes a step 103, obtaining corresponding services according to the certification information stored in the memory.

In summary, according to the method for obtaining information provided by the present embodiment, by reading certification information stored in a smart card of an external device and storing the read certification information in a memory of the terminal, it is possible to obtain corresponding services directly according to the certification information stored in the memory of the terminal, which solves the problems in the background art that the terminal needs to reserve a SIM card deck for the SIM card such that the method for obtaining information provided by the terminal may restrict expansion of the terminal's functions and restrict ultrathin design and miniaturization of the terminal, and meanwhile, which also solves the problems in the background art of high coupling degrees between the electronic devices and bad electromagnetic compatibility of the terminal. An effect that the terminal may integrate more electronic devices in a limited circuit board to expand the terminal's functions and reduce thickness and sizes of the terminal is then achieved.

### Embodiment 2

Referring to Fig. 2, which is an exemplary flow chart showing the method for obtaining information according to a second embodiment of the present disclosure, the method for obtaining information may be applied to a terminal such as a mobile phone. The method for obtaining information may include:
step 201, reading certification information stored in a smart card of an external device, wherein the certification information includes authentication information provided by the operator.

When a user wants to obtain various services provided by an operator by using a terminal, the terminal may read the certification information stored in a smart card of an external device, wherein the certification information may include authentication information provided by the operator.

In actual implementations, in order to facilitate the terminal to read the certification information stored in the smart card, the operator may store the certification information in the smart card in a preset storage manner when manufacturing the smart card. The preset storage manner includes at least one of NFC (Near Field Communication, which is the short-range wireless communication technology) tags and QR codes, that is, the operator manufactures the smart card in form of a NFC tag card or an ordinary card carrying QR codes. Because smart cards store the certification information in different manners, the terminal reads the certification information in different manners, thereby depending on different storage manners, the terminal may read the certification information stored in a smart card of an external device in manners including:
firstly, reading the NFC tags in the smart card to obtain the certification information stored in the smart card by using the NFC technology if the preset storage manner includes NFC tags;
wherein, when the operator who provides a smart card stores the certification information in the smart card in way of NFC tags, the terminal may directly read the NFC tags stored in the smart card to obtain the certification information stored in the smart card by using the NFC technology; and
secondly, reading the QR codes stored in the smart card to obtain the certification information stored in the smart card by using the QR code scanning technology if the preset storage manner includes QR codes;
wherein, when the operator who provides a smart card stores the certification information in the smart card in way of QR codes, the terminal may read the QR codes stored in the smart card to obtain the certification information stored in the smart card by using the QR code scanning technology.

For example, the operator compiles the information stored in the existing SIM card into QR codes to be carried in an ordinary smart card, when the terminal reads the certification information in the smart card, the terminal may use an embedded QR code scanner to scan the QR codes in the smart card, so as to obtain the certification information stored in the smart card.

It is to be supplemented that, in actual usages, the operator may also store the certification information into the smart card by different storage manners according to different usage requirements. The present embodiment only takes the above storage manners as an example, and gives no limitation to the concrete implementations thereof. In addition, since the operator who provides a smart card may also store a part of certification information in the smart card in way of NFC tags, and store another part of certification information in the smart card in way of QR codes, the terminal may read the NFC tags in the smart card by using the NFC technology, and meanwhile read the QR codes in the smart card by using the QR code scanning technology accordingly, so as to obtain all certification information stored in the smart card. The present embodiment is not limited thereto.

The method also includes a step 202, storing the read certification information into a memory of the terminal.

In order to facilitate the terminal to obtain the services of the operator directly according to the read certification information afterwards with no more requirement to read the certification information in the smart card every time in usage, after the terminal reads the certification information stored in the smart card of the external device, the terminal may store the read certification information into the memory of the terminal.

In actual implementations, the terminal storing the read certification information into the memory of the terminal may include:
firstly, storing the read certification information into a preset region of the memory;
wherein, since the memory of the terminal may need to store various information such as photos, short messages, and phone numbers, in order to facilitate the terminal to directly invoke the certification information in the memory, and depress the association between the region for storing the certification information and other regions in the memory, the terminal may store the read certification information into a preset region of the memory after the terminal reads the certification information in the smart card of the external device; and
secondly, setting the preset region of the memory as a read-only region;
wherein, in order to prevent the certification information stored in the memory of the terminal from being deleted by the user, the terminal may set the preset region as a read-only region after the terminal stores the certification information into the preset region of the memory.

The method also includes a step 203, obtaining corresponding services according to the certification information stored in the memory.

After the terminal stores the read certification information into the memory of the terminal, when the terminal needs to obtain services provided by the operator, the terminal may ask for the certification of the operator according to the certification information stored in the memory, and obtain corresponding services after the certification is passed.

In summary, according to the method for obtaining information provided by the present embodiment, by reading certification information stored in a smart card of an external device and storing the read certification information in a memory of the terminal, it is possible to obtain corresponding services directly according to the certification information stored in the memory of the terminal, which solves the problems in the background art that the terminal needs to reserve a SIM card deck for the SIM card such that the method for obtaining information provided by the terminal may restrict expansion of the terminal's functions and restrict ultrathin design and miniaturization of the terminal, and meanwhile, which also solves the problems in the background art of high coupling degrees between the electronic devices and bad electromagnetic compatibility of the terminal. An effect that the terminal may integrate more electronic devices in a limited circuit board to expand the terminal's functions and reduce thickness and sizes of the terminal is then achieved.

### Embodiment 3

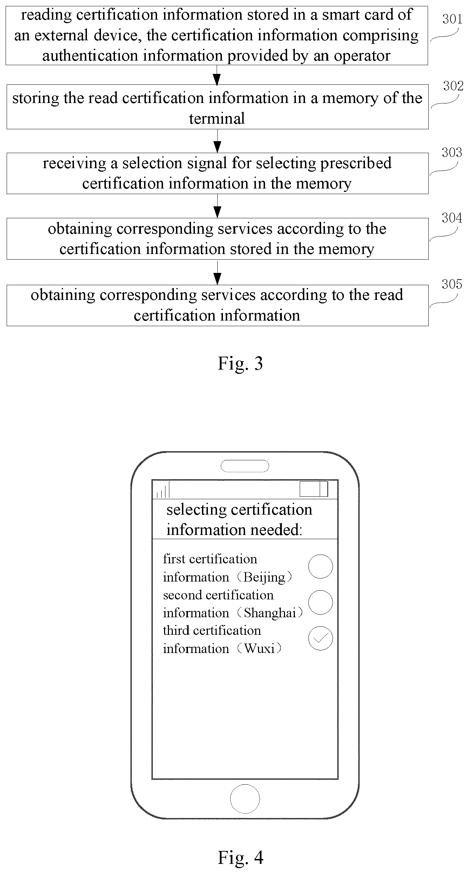

Referring to Fig. 3, which is an exemplary flow chart showing the method for obtaining information according to a third embodiment of the present disclosure, the method for obtaining information may be applied to a terminal such as a mobile phone. The memory of the terminal in the present embodiment may store many items of certification information, which is different from the above embodiments, such that the terminal may obtain corresponding services by selecting different certification information according to the user's selection signals. The method for obtaining information may include:
step 301, reading certification information stored in a smart card of an external device.

When a user wants to obtain various services provided by an operator by using a terminal, the terminal may read certification information stored in a smart card of an external device, wherein the certification information may include authentication information provided by the operator.

In actual implementations, in order to facilitate the terminal to read the certification information stored in the smart card, the operator may store the certification information in the smart card in a preset storage manner when manufacturing the smart card, wherein the preset storage manner includes at least one ofNFC (Near Field Communication, which is the short-range wireless communication technology) tags and QR codes, that is, the operator manufactures the smart card in form of a NFC tag card or an ordinary card carrying QR codes. Because smart cards store the certification information in different manners, the terminal reads the certification information in different manners, thereby depending on different storage manners, the terminal may read the certification information stored in a smart card of an external device in manners including:
firstly, reading the NFC tags in the smart card to obtain the certification information stored in the smart card by using the NFC technology if the preset storage manner includes NFC tags;
wherein, when the operator who provides a smart card stores the certification information in the smart card in way of NFC tags, the terminal may directly read the NFC tags stored in the smart card to obtain the certification information stored in the smart card by using the NFC technology; and
secondly, reading the QR codes stored in the smart card to obtain the certification information stored in the smart card by using the QR code scanning technology if the preset storage manner includes QR codes;
wherein, when the operator who provides a smart card stores the certification information in the smart card in way of QR codes, the terminal may read the QR codes stored in the smart card to obtain the certification information stored in the smart card by using the QR code scanning technology.

For example, the operator compiles the information stored in the SIM card into QR codes to be carried in an ordinary smart card, when the terminal reads the certification information in the smart card, the terminal may use an embedded QR code scanner to scan the QR codes in the smart card, so as to obtain the certification information stored in the smart card.

It is to be supplemented that, in actual usages, the operator may also store the certification information into the smart card by different storage manners according to different usage requirements. The present embodiment only takes the above storage manners as an example, and gives no limitation to the concrete implementations thereof. In addition, since the operator who provides a smart card may also store a part of certification information in the smart card in way of NFC tags, and store another part of certification information in the smart card in way of QR codes, the terminal may read the NFC tags in the smart card by using the NFC technology, and meanwhile read the QR codes in the smart card by using the QR code scanning technology accordingly, so as to obtain all certification information stored in the smart card. The present embodiment is not limited thereto.

The method also includes a step 302, storing the read certification information into a memory of the terminal;

In order to facilitate the terminal to obtain the services of the operator directly according to the read certification information afterwards with no more requirement to read the certification information in the smart card every time in usage, after the terminal reads the certification information stored in the smart card of the external device, the terminal may store the read certification information into the memory of the terminal.

In actual implementations, the terminal storing the read certification information into the memory of the terminal may include:
firstly, storing the read certification information into a preset region of the memory;
wherein, since the memory of the terminal may need to store various information, in order to facilitate the terminal to directly invoke the certification information in the memory, and depress the association between the region for storing the certification information and other regions in the memory, the terminal may store the read certification information into a preset region of the memory after the terminal reads the certification information; and
secondly, setting the preset region of the memory as a read-only region;
wherein, in order to prevent the certification information stored in the memory of the terminal from being deleted by the user, the terminal may set the preset region as a read-only region after the terminal stores the certification information into the preset region of the memory.

The method also includes a step 303, receiving a selection signal for selecting prescribed certification information in the memory.

In actual usages, the user may obtain services provided by the operator by using different certification information according to different usage requirements. For example, in order to save telephone bills, the user may use a local SIM card every time the user travels to a new place, that is, the terminal obtains services provided by the operator by using new certification information every time the user travels to a new place. Every time the user asks for new certification information, the terminal may read the certification information stored in a smart card of an external device accordingly, and store each of the read certification information into the memory of the terminal, thereby the memory of the terminal may have two or more items of the certification information stored therein. Afterwards, for the convenience of the user's usage, when the user asks for the terminal to obtain the services of the operator by using a certain item of the certification information stored in the memory, the user may select the corresponding certification information stored in the memory. Accordingly, the terminal may receive a selection signal for selecting prescribed certification information in the memory.

For example, in a case where the memory of the terminal stores three items of the certification information such as 'the first certification information, the second certification information and the third certification information', being attributed to regions of 'Beijing, Shanghai and Wuxi' respectively, and the user is now traveling in Wuxi, in order to save telephone bills, the user may select the third certification information stored in the memory of the terminal to obtain services provided by the operator. At this time, the user may select the third certification information in the selection menu provided by the terminal, referring to Fig. 4 for details.

It is to be explained that, when the terminal stores each item of the certification information into the memory, the terminal may set a serial number for every item of the certification information, such that when the user asks for using an item of the certification information in the memory, the user may select the certification information in manner of selecting the serial number. In actual usages, however, it may also adopt other ways of marking, the present embodiment is not limited thereto.

The method also includes a step 304, reading the prescribed certification information stored in the memory according to the selection signal.

After the terminal receives the selection signal for selecting prescribed certification information, the terminal may reads the prescribed certification information stored in the memory according to selection signal.

The method also includes a step 305, obtaining corresponding services according to the read certification information.

After the terminal reads the prescribed certification information, the terminal may obtain corresponding services according to the read certification information. For example, after the terminal receives the selection signal for selecting the third certification information attributing to Wuxi, the terminal may read the third certification information, thereby to use the third certification information to ask for the certification of the operator, and obtain services provided by the operator such as phone calling, sending short messages or logging on network after the certification is passed.

In summary, according to the method for obtaining information provided by the present embodiment, by reading certification information stored in a smart card of an external device and storing the read certification information into a memory of the terminal, it is possible to obtain corresponding services directly according to the certification information stored in the memory of the terminal, which solves the problems in the background art that the terminal needs to reserve a SIM card deck for the SIM card such that the method for obtaining information provided by the terminal may restrict expansion of the terminal's functions and restrict ultrathin design and miniaturization of the terminal, and meanwhile, which also solves the problems in the background art of high coupling degrees between the electronic devices and bad electromagnetic compatibility of the terminal. An effect that the terminal may integrate more electronic devices in a limited circuit board to expand the terminal's functions and reduce thickness and sizes of the terminal is then achieved. Meanwhile, in the present embodiment, by storing a plurality of items of the certification information into the memory of the terminal, the terminal may select the certification information required by the user and obtain the services of the operator by using the certification information, which may achieve an effect that the user, when needs to change the certification information, only needs to select corresponding certification information in the terminal without executing a rather complex operation of pulling out the original SIM card and inserting a new SIM card, which is convenient for the user's usage.

### Embodiment 4

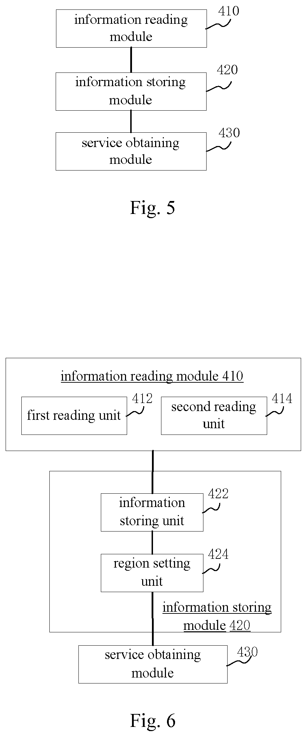

Referring to Fig. 5, which is a block diagram showing the structure of the device for obtaining information according to a fourth embodiment of the present disclosure. The device for obtaining information may be implemented by a part or the whole of a terminal such as a mobile phone. The device for obtaining information may include: an information reading module 410, an information storing module 420 and a service obtaining module 430; wherein
the information reading module 410 is configured to read certification information stored in a smart card of an external device, the certification information including authentication information provided by an operator;
the information storing module 420 is configured to store the certification information read by the information reading module 410 in a memory of the terminal; and
the service obtaining module 430 is configured to obtain corresponding services according to the certification information stored in the memory.

In summary, according to the device for obtaining information provided by the present embodiment, by reading certification information stored in a smart card of an external device and storing the read certification information into a memory of the terminal, it is possible to obtain corresponding services directly according to the certification information stored in the memory of the terminal, which solves the problems in the background art that the terminal needs to reserve a SIM card deck for the SIM card such that the method for obtaining information provided by the terminal may restrict expansion of the terminal's functions and restrict ultrathin design and miniaturization of the terminal, and meanwhile, which also solves the problems in the background art of high coupling degrees between the electronic devices and bad electromagnetic compatibility of the terminal. An effect that the terminal may integrate more electronic devices in a limited circuit board to expand the terminal's functions and reduce thickness and sizes of the terminal is then achieved.

### Embodiment 5

Referring to Fig. 6, which is a block diagram showing the structure of the device for obtaining information according to a fifth embodiment of the present disclosure. The device for obtaining information may be implemented by a part or the whole of a terminal such as a mobile phone. The device for obtaining information may include: an information reading module 410, an information storing module 420 and a service obtaining module 430; wherein
the information reading module 410 is configured to read certification information stored in a smart card of an external device, the certification information including authentication information provided by an operator;
the information storing module 420 is configured to store the certification information read by the information reading module 410 in a memory of the terminal; and
the service obtaining module 430 is configured to obtain corresponding services according to the certification information stored in the memory.

The certification information stored in the smart card of the external device includes the certification information stored in the smart card in a preset storage manner, wherein the preset storage manner includes at least one of NFC tags using short-range wireless communication technology and QR codes.

The information reading module 410 may include: a first reading unit 412 and/or a second reading unit 414; wherein
the first reading unit 412 is configured to obtain the certification information stored in the smart card by reading the NFC tags in the smart card with the NFC technology if the preset storage manner includes NFC tags; and
the second reading unit 414 is configured to obtain the certification information stored in the smart card by reading the QR codes in the smart card with the QR code scanning technology if the preset storage manner includes QR codes.

The information storing module 420 may include: an information storing unit 422 and a region setting module 424; wherein
the information storing unit 422 is configured to store the read certification information into a preset region of the memory; and
the region setting unit 424 is configured to set the preset region of the memory as a read-only region.

In summary, according to the device for obtaining information provided by the present embodiment, by reading certification information stored in a smart card of an external device and storing the read certification information into a memory of the terminal, it is possible to obtain corresponding services directly according to the certification information stored in the memory of the terminal, which solves the problems in the background art that the terminal needs to reserve a SIM card deck for the SIM card such that the method for obtaining information provided by the terminal may restrict expansion of the terminal's functions and restrict ultrathin design and miniaturization of the terminal, and meanwhile, which also solves the problems in the background art of high coupling degrees between the electronic devices and bad electromagnetic compatibility of the terminal. An effect that the terminal may integrate more electronic devices in a limited circuit board to expand the terminal's functions and reduce thickness and sizes of the terminal is then achieved.

### Embodiment 6

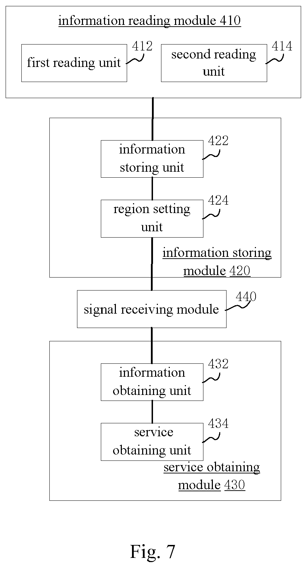

Referring to Fig. 7, which is a block diagram showing the structure of the device for obtaining information according to a sixth embodiment of the present disclosure. The device for obtaining information may be implemented by a part or the whole of a terminal such as a mobile phone. The device for obtaining information may include: an information reading module 410, an information storing module 420 and a service obtaining module 430; wherein
the information reading module 410 is configured to read certification information stored in a smart card of an external device, the certification information including authentication information provided by an operator;
the information storing module 420 is configured to store the certification information read by the information reading module 410 in a memory of the terminal; and
the service obtaining module 430 is configured to obtain corresponding services according to the certification information stored in the memory.

The certification information stored in the smart card of the external device includes the certification information stored in the smart card in a preset storage manner, wherein the preset storage manner includes at least one of NFC tags using short-range wireless communication technology and QR codes.

The information reading module 410 may include: a first reading unit 412 and/or a second reading unit 414; wherein
the first reading unit 412 is configured to obtain the certification information stored in the smart card by reading the NFC tags in the smart card with the NFC technology if the preset storage manner includes NFC tags; and
the second reading unit 414 is configured to obtain the certification information stored in the smart card by reading the QR codes in the smart card with the QR code scanning technology if the preset storage manner includes QR codes.

If the certification information stored in the memory of the terminal has two or more items, the device for obtaining information may further include: a signal receiving module 440; wherein
the signal receiving module 440 is configured to receive a selection signal for selecting prescribed certification information in the memory.

The service obtaining module 430 includes an information obtaining unit 432 and a service obtaining unit 434; wherein
the information obtaining unit 432 is configured to read the prescribed certification information stored in the memory according to the selection signal received by the signal receiving module; and
the service obtaining unit 434 is configured to obtain corresponding services according to the certification information read by the information obtaining unit.

For example, the information storing module 420 may include: an information storing unit 422 and a region setting module 424; wherein
the information storing unit 422 is configured to store the read certification information into a preset region of the memory; and
the region setting unit 424 is configured to set the preset region of the memory as a read-only region.

In summary, according to the device for obtaining information provided by the present embodiment, by reading certification information stored in a smart card of an external device and storing the read certification information into a memory of the terminal, it is possible to obtain corresponding services directly according to the certification information stored in the memory of the terminal, which solves the problems in the background art that the terminal needs to reserve a SIM card deck for the SIM card such that the method for obtaining information provided by the terminal may restrict expansion of the terminal's functions and restrict ultrathin design and miniaturization of the terminal, and meanwhile, which also solves the problems in the background art of high coupling degrees between the electronic devices and bad electromagnetic compatibility of the terminal. An effect that the terminal may integrate more electronic devices in a limited circuit board to expand the terminal's functions and reduce thickness and sizes of the terminal is then achieved. Meanwhile, in the present embodiment, by storing a plurality of items of the certification information into the memory of the terminal, the terminal may select the certification information required by the user and obtain services of the operator by using the certification information, which may achieve an effect that the user, when needs to change the certification information, only needs to select corresponding certification information in the terminal without executing a rather complex operation of pulling out the original SIM card and inserting a new SIM card, which is convenient for the user's usage.

### Embodiment 7

The seventh embodiment of the present disclosure provides a smart card, which includes a chip supporting the NFC technology and/or carries QR codes, the NFC chip and/or the QR codes storing therein certification information including authentication information provided by the operator.

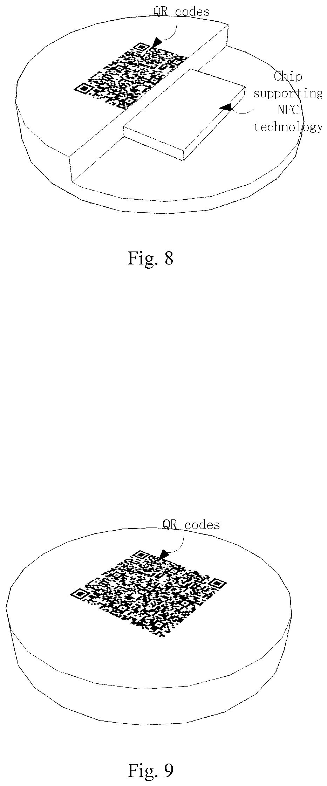

In actual implementations, the smart card may include a chip supporting the NFC technology and simultaneously carry QR codes, the inner structure of which may be shown in Fig. 8, and the external appearance of which may be shown in Fig. 9. Of course, the smart card may only include a chip supporting the NFC technology, or only carry QR codes. The present embodiment is not limited thereto.

It is to be supplemented that, in actual implementations, the smart card may be manufactured into any possible shapes according to the user's requirements. The present embodiment only takes the cooky-type as an example, but the actual shape thereof is not limited thereto.

In summary, according to the smart card provided by the present embodiment, by storing the certification information in a chip supporting NFC or in QR codes, or in the chip supporting NFC and in the QR codes simultaneously, the terminal may read the certification information stored in the smart card, and store the read certification information into the terminal, which solves the problem in the background art of reserving a SIM card deck in the terminal for inserting a SIM card thus causing high coupling degrees between the electronic devices and bad electromagnetic compatibility of the terminal.

It is to be explained that, the devices for obtaining information provided by the above embodiments, when obtaining information, are only illustrated by being divided into the above respective function modules. In actual applications, the device for obtaining information may assign the above functions to different function modules according to requirements, that is, to divide the inner structure of the device into different function modules so as to accomplish the whole or a part of functions described above. In addition, the devices for obtaining information provided by the above embodiments share the same conception with the method-embodiments of the methods for obtaining information, the concrete implementing procedure of which may be seen by referring to the method-embodiments, and is not described repeatedly.

The serial numbers for the embodiments of the present disclosure are only used for description, but not for showing the superiority and inferiority of the embodiments.

It should be understood by those skilled in the art that the whole or parts of steps in the above embodiments may be implemented by hardware, or by programs instructing the related hardware. The programs may be stored in a computer readable storage medium. The storage medium described above may be a read-only memory, a magnetic disc, an optical disc or the like.

The above descriptions are only for the preferred embodiments of the present disclosure, which are not used to limit the present disclosure. Any variations, equivalent substitutions, and modifications made within the principles of the present disclosure shall be encompassed in the scope of the present disclosure.

## Claims

1. A method for obtaining information, the method being applied to a terminal that does not have a SIM card deck reserved for a SIM card, the method comprising:
reading (101,201,301) certification information stored in a smart card of an external device in a preset storage manner comprising at least one of NFC tags using short-range wireless communication technology and QR codes, the certification information comprising authentication information provided by an operator; said reading comprising reading the NFC tags in the smart card to obtain the certification information stored in the smart card by using the NFC technology if the preset storage manner comprises NFC tags; and reading the QR codes in the smart card to obtain the certification information stored in the smart card by using the QR code scanning technology if the preset storage manner comprises QR codes;
storing (102,202,302) the read certification information in a memory of the terminal; and
obtaining (103,203,304) corresponding services according to the certification information stored in the memory;
wherein the certification information stored in the memory of the terminal has two or more items each comprising authentication information provided by operators at different geographical regions and before obtaining corresponding services according to the certification information stored in the memory, the method further comprises:
attributing the two or more items to the geographical regions of the operators that provided their respective authentication information; displaying the two or more items along with their respective geographical regions;
receiving a selection signal for selecting prescribed certification information in the memory;
said obtaining corresponding services according to the certification information stored in the memory comprises:
reading the prescribed certification information stored in the memory according to the selection signal; and
obtaining corresponding services according to the read certification information.

2. The method for obtaining information according to claim 1, wherein storing the read certification information in a memory of the terminal comprises:
storing the read certification information into a preset region of the memory; and
setting the preset region of the memory as a read-only region.

3. A terminal comprising a device for obtaining information, the device being applied to the terminal, wherein the terminal does not have a SIM card deck reserved for a SIM card, the device comprising:
an information reading module (410) configured to read certification information stored in a smart card of an external device in a preset storage manner, the preset storage manner comprising at least one of NFC tags using short-range wireless communication technology and QR codes, the certification information comprising authentication information provided by an operator; said information reading module comprises:
a first reading unit (412) and/or a second reading unit(414); wherein
the first reading unit (412) is configured to read the NFC tags in the smart card to obtain the certification information stored in the smart card by using the NFC technology when the preset storage manner comprises NFC tags; and
the second reading unit (414) is configured to read the QR codes in the smart card to obtain the certification information stored in the smart card by using the QR code scanning technology when the preset storage manner comprises QR codesan information storing module (420) configured to store the certification information read by the information reading module in a memory of the terminal; and
a service obtaining module (430) configured to obtain corresponding services according to the certification information stored in the memory;
wherein the certification information stored in the memory of the terminal has two or more items each comprising authentication information provided by operators at different geographical regions and the device is configured to attribute the two or more items to the geographical regions of the operators that provided their respective authentication information; and display the two or more items along with their respective geographical regions;
the device further comprises:
a signal receiving module configured to receive a selection signal for selecting prescribed certification information in the memory;
wherein the service obtaining module (430) comprises:
an information obtaining unit (432) configured to read the prescribed certification information stored in the memory according to the selection signal received by the signal receiving module; and
a service obtaining unit (434) configured to obtain corresponding services according to the certification information read by the information obtaining unit.

4. The terminal for obtaining information according to claim 3, wherein the information storing module (420) comprises:
an information storing unit (422) configured to store the read certification information into a preset region of the memory; and
a region setting unit (424) configured to set the preset region of the memory as a read-only region.

5. A computer program, which when executed on a terminal, adapts the terminal to implement the method according to claim 1 or claim 2.

6. A computer program stored on a computer readable storage medium, comprising computer-readable program means for causing a terminal to implement the method according to claim 1 or claim 2.

## Patentansprüche

1. Verfahren zum Erhalten von Informationen, wobei das Verfahren auf ein Endgerät angewendet wird, das keinen für eine SIM-Karte reservierten SIM-Kartenschacht hat, wobei das Verfahren Folgendes aufweist:
Lesen (101, 201, 301) von Zertifizierungsinformationen, die in einer Chipkarte einer externen Vorrichtung auf eine vorgegebene Speicherungsweise gespeichert werden, die wenigstens einen von NFC-Transpondern, die drahtlose Nahfeldkommunikationstechnologie verwenden, und QR-Codes umfasst, wobei die Zertifizierungsinformationen von einem Betreiber bereitgestellte Authentifizierungsinformationen aufweisen; wobei das genannte Lesen das Lesen der NFC-Transponder in der Chipkarte zum Erhalten der in der Chipkarte gespeicherten Zertifizierungsinformationen durch Verwenden der NFC-Technologie umfasst, falls die vorgegebene Speicherungsweise NFC-Transponder umfasst; und das Lesen der QR-Codes in der Chipkarte zum Erhalten der in der Chipkarte gespeicherten Zertifizierungsinformationen durch Verwenden der QR-Scanning-Technologie umfasst, falls die vorgegebene Speicherungsweise QR-Codes umfasst;
Speichern (102, 202, 302) der gelesenen Zertifizierungsinformationen in einem Speicher des Endgeräts; und
Erhalten (103, 203, 304) entsprechender Dienste gemäß den im Speicher gespeicherten Zertifizierungsinformationen;
wobei die im Speicher des Endgeräts gespeicherten Zertifizierungsinformationen zwei oder mehr Elemente haben, die jeweils Authentifizierungsinformationen umfassen, die von Betreibern in verschiedenen geographischen Regionen bereitgestellt werden, und das Verfahren vor Erhalten entsprechender Dienste gemäß den im Speicher gespeicherten Zertifizierungsinformationen ferner Folgendes aufweist:
Zuschreiben der zwei oder mehr Elemente zu den geographischen Regionen der Betreiber, die ihre jeweiligen Authentifizierungsinformationen bereitstellten;
Anzeigen der zwei oder mehr Artikel zusammen mit ihren jeweiligen geographischen Regionen;
Empfangen eines Auswahlsignals zum Auswählen vorgeschriebener Zertifizierungsinformationen im Speicher;
wobei das genannte Erhalten entsprechender Dienste gemäß den im Speicher gespeicherten Zertifizierungsinformationen Folgendes aufweist:
Lesen der vorgeschriebenen im Speicher gespeicherten Zertifizierungsinformationen gemäß dem Auswahlsignal; und
Erhalten entsprechender Dienste gemäß den gelesenen Zertifizierungsinformationen.

2. Verfahren zum Erhalten von Informationen nach Anspruch 1, wobei das Speichern der gelesenen Zertifizierungsinformationen in einem Speicher des Endgeräts Folgendes aufweist:
Abspeichern der gelesenen Zertifizierungsinformationen in eine vorgegebene Region des Speichers; und
Einstellen der vorgegebenen Region des Speichers als Nur-Lese-Region.

3. Endgerät, das eine Vorrichtung zum Erhalten von Informationen aufweist, wobei die Vorrichtung auf das Endgerät angewendet wird, wobei das Endgerät keinen für eine SIM-Karte reservierten SIM-Kartenschacht hat, wobei die Vorrichtung Folgendes aufweist:
ein Informationslesemodul (410), das zum Lesen von Zertifizierungsinformationen konfiguriert ist, die in einer Chipkarte einer externen Vorrichtung auf eine vorgegebene Speicherungsweise gespeichert werden, wobei die vorgegebene Speicherungsweise wenigstens einen von NFC-Transpondern, die drahtlose Nahfeldkommunikationstechnologie verwenden, und QR-Codes umfasst, wobei die Zertifizierungsinformationen von einem Betreiber bereitgestellte Authentifizierungsinformationen aufweisen; wobei das genannte Informationslesemodul Folgendes aufweist:
eine erste Leseeinheit (412) und/oder eine zweite Leseeinheit (414); wobei
die erste Leseeinheit (412) zum Lesen der NFC-Transponder in der Chipkarte zum Erhalten der in der Chipkarte gespeicherten Zertifizierungsinformationen durch Verwenden der NFC-Technologie konfiguriert ist, wenn die vorgegebene Speicherungsweise NFC-Transponder umfasst; und
die zweite Leseeinheit (414) zum Lesen der QR-Codes in der Chipkarte zum Erhalten der in der Chipkarte gespeicherten Zertifizierungsinformationen durch Verwenden der QR-Scanning-Technologie konfiguriert ist, wenn die vorgegebene Speicherungsweise QR-Codes umfasst;
ein Informationsspeichermodul (420), das zum Speichern der vom Informationslesemodul gelesenen Zertifizierungsinformationen in einem Speicher des Endgeräts konfiguriert ist; und
ein Diensterhaltungsmodul (430), das zum Erhalten entsprechender Dienste gemäß den im Speicher gespeicherten Zertifizierungsinformationen konfiguriert ist;
wobei die im Speicher des Endgeräts gespeicherten Zertifizierungsinformationen zwei oder mehr Elemente haben, die jeweils Authentifizierungsinformationen umfassen, die von Betreibern in verschiedenen geographischen Regionen bereitgestellt werden, und die Vorrichtung konfiguriert ist zum Zuschreiben der zwei oder mehr Elemente zu den geographischen Regionen der Betreiber, die ihre jeweiligen Authentifizierungsinformationen bereitstellten;
und Anzeigen der zwei oder mehr Artikel zusammen mit ihren jeweiligen geographischen Regionen;
wobei die Vorrichtung ferner Folgendes aufweist:
ein Signalempfangsmodul, das zum Empfangen eines Auswahlsignals zum Auswählen vorgeschriebener Zertifizierungsinformationen im Speicher konfiguriert ist;
wobei das Diensterhaltungsmodul (430) Folgendes aufweist:
eine Informationserhaltungseinheit (432), die zum Lesen der vorgeschriebenen im Speicher gespeicherten Zertifizierungsinformationen gemäß dem durch das Signalempfangsmodul empfangenen Auswahlsignal konfiguriert ist; und
eine Diensterhaltungseinheit (434), die zum Erhalten entsprechender Dienste gemäß den durch die Informationserhaltungseinheit gelesenen Zertifizierungsinformationen konfiguriert ist.

4. Endgerät zum Erhalten von Informationen nach Anspruch 3, wobei das Informationen speichernde Modul (420) Folgendes aufweist:
eine Informationen speichernde Einheit (422), die zum Speichern der gelesenen Zertifizierungsinformationen in eine vorgegebene Region des Speichers konfiguriert ist; und
eine Regionseinstellungseinheit (424), die zum Einstellen der vorgegebenen Region des Speichers als Nur-Lese-Region konfiguriert ist.

5. Computerprogramm, das bei Ausführung in einem Endgerät das Endgerät zum Implementieren des Verfahrens nach Anspruch 1 oder Anspruch 2 geeignet macht.

6. Computerprogramm, auf einem computerlesbaren Speichermedium gespeichert, das ein computerlesbares Programmmittel zum Veranlassen eines Endgeräts zum Implementieren des Verfahrens nach Anspruch 1 oder Anspruch 2 aufweist.

## Revendications

1. Procédé d'obtention d'informations, le procédé étant appliqué à un terminal qui n'a pas d'emplacement de carte SIM réservé pour une carte SIM, le procédé comprenant :
la lecture (101, 201, 301) d'informations de certification mémorisées dans une carte à puce d'un dispositif externe dans un mode de mémorisation prédéfini comprenant au moins un d'étiquettes NFC utilisant la technologie de communication sans fil de courte portée et de codes QR, les informations de certification comprenant des informations d'authentification fournies par un opérateur, ladite lecture comprenant la lecture des étiquettes NFC dans la carte à puce pour obtenir les informations de certification mémorisées dans la carte à puce en utilisant la technologie NFC si le mode de mémorisation prédéfini comprend des étiquettes NFC ; et la lecture des codes QR dans la carte à puce pour obtenir les informations de certification mémorisées dans la carte à puce en utilisant la technologie de balayage de codes QR si le mode de mémorisation prédéfini comprend des codes QR ;
la mémorisation (102, 202, 302) des informations de certification lues dans une mémoire du terminal ; et
l'obtention (103, 203, 304) de services correspondants conformément aux informations de certification mémorisées dans la mémoire ;
dans lequel les informations de certification mémorisées dans la mémoire du terminal présentent deux ou plusieurs éléments comprenant chacun des informations d'authentification fournies par des opérateurs au niveau de régions géographiques différentes et
avant l'obtention de services correspondants conformément aux informations de certification mémorisées dans la mémoire, le procédé comprend en outre :
l'attribution des deux ou plusieurs éléments aux régions géographiques des opérateurs qui ont fourni leurs informations d'authentification respectives ;
l'affichage des deux ou plusieurs éléments ainsi que de leurs régions géographiques respectives ;
la réception d'un signal de sélection pour sélectionner des informations de certification prescrites dans la mémoire ;
ladite obtention de services correspondants conformément aux informations de certification mémorisées dans la mémoire comprend :
la lecture des informations de certification prescrites mémorisées dans la mémoire conformément au signal de sélection ; et
l'obtention de services correspondants conformément aux informations de certification lues.

2. Procédé d'obtention d'informations selon la revendication 1, dans lequel la mémorisation des informations de certification lues dans une mémoire du terminal comprend :
la mémorisation des informations de certification lues dans une région prédéfinie de la mémoire ; et
la définition de la région prédéfinie de la mémoire en tant que région de lecture uniquement.

3. Terminal comprenant un dispositif d'obtention d'informations, le dispositif étant appliqué au terminal, dans lequel le terminal ne comporte pas d'emplacement de carte SIM réservé pour une carte SIM, le dispositif comprenant :
un module de lecture d'informations (410) configuré pour lire des informations de certification mémorisées dans une carte à puce d'un dispositif externe dans un mode de mémorisation prédéfini, le mode de mémorisation défini comprenant au moins un d'étiquettes NFC utilisant la technologie de communication sans fil de courte portée et de codes QR, les informations de certification comprenant des informations d'authentification fournies par un opérateur ; ledit module de lecture d'informations comprenant :
une première unité de lecture (412) et/ou une seconde unité de lecture (414) ; dans lequel
la première unité de lecture (412) est configurée pour lire les étiquettes NFC dans la carte à puce pour obtenir les informations de certification mémorisées dans la carte à puce en utilisant la technologie NFC quand le mode de mémorisation prédéfini comprend des étiquettes NFC ; et
la seconde unité de lecture (414) est configurée pour lire les codes QR dans la carte à puce pour obtenir les informations de certification mémorisées dans la carte à puce en utilisant la technologie de balayage de codes QR quand le mode de mémorisation prédéfini comprend des codes QR ;
un module de mémorisation d'informations (420) configuré pour mémoriser les informations de certification lues par le module de lecture d'informations dans une mémoire du terminal ; et
un module d'obtention de services (430) configuré pour obtenir des services correspondants conformément aux informations de certification mémorisées dans la mémoire ;
dans lequel les informations de certification mémorisées dans la mémoire du terminal présentent deux ou plusieurs éléments comprenant chacun des informations d'authentification fournies par des opérateurs au niveau de régions géographiques différentes et
le dispositif est configuré pour attribuer les deux ou plusieurs éléments aux régions géographiques des opérateurs qui ont fourni leurs informations d'authentification respectives ;
et afficher les deux ou plusieurs éléments ainsi que leurs régions géographiques respectives ;
le dispositif comprenant en outre :
un module de réception de signal configuré pour recevoir un signal de sélection pour sélectionner des informations de certification prescrites dans la mémoire ;
dans lequel le module d'obtention de services (430) comprend :
une unité d'obtention d'informations (432) configurée pour lire les informations de certification prescrites mémorisées dans la mémoire conformément au signal de sélection reçu par le module de réception de signal ; et
une unité d'obtention de services (434) configurée pour obtenir des services correspondants conformément aux informations de certification lues par l'unité d'obtention d'informations.

4. Terminal d'obtention d'informations selon la revendication 3, dans lequel le module de mémorisation d'information (420) comprend :
une unité de mémorisation d'informations (422) configurée pour mémoriser les informations de certification lues dans une région prédéfinie de la mémoire ; et
une unité de définition de région (424) configuré pour définir la région prédéfinie de la mémoire en tant que région de lecture uniquement.

5. Programme informatique qui, à son exécution sur un terminal, adapte le terminal pour mettre en oeuvre le procédé selon la revendication 1 ou la revendication 2.

6. Programme informatique stocké sur un support de mémorisation lisible par ordinateur, comprenant des moyens de programme lisibles par ordinateur pour amener un terminal à mettre en oeuvre le procédé selon la revendication 1 ou la revendication 2.
